(19) Europäisches Patentamt
European Patent Office
Office européen des brevets

(11) **EP 4 600 984 A2**

(12) **EUROPEAN PATENT APPLICATION**

(43) Date of publication:
**13.08.2025 Bulletin 2025/33**

(21) Application number: **25155953.0**

(22) Date of filing: **05.02.2025**

(51) International Patent Classification (IPC):
**H01G 4/12** *(2006.01)*     **H01G 4/30** *(2006.01)*
**C04B 35/465** *(2006.01)*     **H01G 4/012** *(2006.01)*
**C04B 35/468** *(2006.01)*

(52) Cooperative Patent Classification (CPC):
**H01G 4/1227; C04B 35/465; H01G 4/30;**
C04B 35/468; H01G 4/012; H01G 4/1218;
H01G 4/1245

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.02.2024 KR 20240019879
02.07.2024 KR 20240086808**

(71) Applicant: **Samsung Electro-Mechanics Co., Ltd.
Suwon-si, Gyeonggi-do 16674 (KR)**

(72) Inventors:
• **Choi, Wonmi
16674 Suwon-si, Gyeonggi-do (KR)**

• **Oh, Yuhong
16674 Suwon-si, Gyeonggi-do (KR)**
• **Kim, Byungkun
16674 Suwon-si, Gyeonggi-do (KR)**
• **Shin, Sumin
16674 Suwon-si, Gyeonggi-do (KR)**
• **Ahn, Jihye
16674 Suwon-si, Gyeonggi-do (KR)**
• **Lee, Sunghwan
16674 Suwon-si, Gyeonggi-do (KR)**
• **Kim, Dojeon
16674 Suwon-si, Gyeonggi-do (KR)**

(74) Representative: **Grünecker Patent- und
Rechtsanwälte
PartG mbB
Leopoldstraße 4
80802 München (DE)**

(54) **MULTILAYERED CERAMIC CAPACITOR**

(57)     A multilayered ceramic capacitor includes a capacitor body including a dielectric layer and an internal electrode, and an external electrode disposed on the outside of the capacitor body, wherein the multilayered ceramic capacitor includes Ti and Ge, and in the multilayered ceramic capacitor, a content of Ge based on 100 moles of Ti is about 0.01 moles to about 20 moles.

FIG. 1

**EP 4 600 984 A2**

**Description**

**CROSS-REFERENCE TO RELATED APPLICATION**

This application claims priority to and the benefit of Korean Patent Application No. 10-2024-0086808 filed in the Korean Intellectual Property Office on July 2, 2024, and Korean Patent Application No. 10-2024-0019879 filed in the Korean Intellectual Property Office on February 8, 2024, the entire contents of which are incorporated herein by reference.

**BACKGROUND**

**(a) Technical Field**

The present disclosure relates to a multilayered ceramic capacitor.

**(b) Description of the Related Art**

Recently, as multi-functionalization and miniaturization of electronic devices have been rapidly progressing, miniaturization and performance improvement of electronic components have also been progressing at a rapid pace. Further, the demand for high reliability of electric devices for use in automobiles, network equipment, or the like and electronic components for use in industries has also been increasing significantly.

In order to meet such market demands, competition for technology development of passive components such as inductors, capacitors, or resistors has been accelerating. In particular, great effort has been required to dominate the market by developing various multilayered ceramic capacitor (MLCC) products whose applications and usage as passive components have been continuously increasing.

In addition, a multilayered ceramic capacitor is manufactured by stacking dielectric layers and internal electrodes, and is used in various electronic devices such as mobile phones, laptops, and LCD TVs.

With recent technological advancements, multilayered ceramic capacitors are required to be miniaturized and have higher capacitance, and this requires a reduction in the thickness (thinning) of the internal electrodes and dielectric layers. As the thickness of the dielectric layer decreases, the electric field strength applied per layer becomes relatively stronger, which causes a decrease in the reliability of the capacitor, and there is also a problem that the electrostatic capacitance decreases due to deterioration of electrode connectivity.

**SUMMARY**

One aspect of the embodiments provides a multilayered ceramic capacitor having improved capacitance, reliability, and temperature characteristics.

However, the problems that the embodiments seek to solve are not limited to the aforementioned problems and can be expanded in various ways within the scope of the technical ideas included in the embodiments.

A multilayered ceramic capacitor according to an embodiment includes a capacitor body including a dielectric layer and an internal electrode, and an external electrode disposed on an outer surface the capacitor body, wherein the multilayered ceramic capacitor includes Ti and Ge, and in the multilayered ceramic capacitor, a content of Ge based on 100 moles of Ti is about 0.01 moles to about 20 moles.

The dielectric layer includes Ti and Ge, and the internal electrode includes Ni and Ge. When an average content (mole) of Ge in the internal electrode relative to 100 moles of Ni in the internal electrode is X and an average content (mole) of Ge in the dielectric layer relative to 100 moles of Ti in the dielectric layer is Y, a relationship between X and Y may satisfy Equation 1.

$$[\text{Equation 1}]$$

$$X/Y \geq 1$$

X may be about 0.1 moles to about 15 moles.

Y may be about 0.05 moles to about 10 moles.

The dielectric layer may include a plurality of dielectric crystal grains; and a grain boundary between at least two of the plurality of dielectric crystal grains, the plurality of dielectric crystal grains may include a main component and a subcomponent, and the main component may include $Ba_mTiO_3$ ($0.995 \leq m \leq 1.010$), $(Ba_{1-x}Ca_x)_m(Ti_{1-y}Zr_y)O_3$ ($0.995 \leq m \leq 1.010$, $0 \leq x \leq 0.10$, $0 < y \leq 0.20$), $Ba_m(Ti_{1-x}Zr_x)O_3$ ($0.995 \leq m \leq 1.010$, $x \leq 0.10$), $(Ba_{1-x}Ca_x)_m(Ti_{1-y}Sn_y)O_3$

(0.995≤m≤1.010, 0≤x≤0.10, 0<y≤0.20), or a combination thereof.

The subcomponent may include Ge, Dy, V, Mn, Cr, Si, Al, Mg, Sn, Sb, Ga, In, Ba, La, Y, Ac, Ce, Pr, Nd, Pm, Sm, Eu, Gd, Tb, Ho, Er, Tm, Yb, Lu, Hf, or a combination thereof.

An average thickness of the internal electrode may be about 0.05 $\mu$m to about 2 $\mu$m.

An average thickness of the dielectric layer may be about 0.05 $\mu$m to about 10 $\mu$m.

A multilayered ceramic capacitor according to another embodiment includes a capacitor body including a dielectric layer and an internal electrode, and an external electrode disposed on an outer surface of the capacitor body, wherein the multilayered ceramic capacitor includes Ti and Ge, in the multilayered ceramic capacitor, a content of Ge based on 100 moles of Ti is about 0.01 mole to about 20 moles, the dielectric layer includes a plurality of dielectric crystal grains; and a grain boundary between at least two of the plurality of dielectric crystal grains, and the grain boundary includes Ge, Ge oxide, or a combination thereof.

The plurality of dielectric crystal grains may include a main component and a subcomponent, and the main component may include $Ba_mTiO_3$ (0.995≤m≤1.010), $(Ba_{1-x}Ca_x)_m(Ti_{1-y}Zr_y)O_3$ (0.995≤m≤1.010, 0≤x≤0.10, 0<y≤0.20), $Ba_m(Ti_{1-x}Zr_x)O_3$ (0.995≤m≤1.010, x≤0.10), $(Ba_{1-x}Ca_x)_m(Ti_{1-y}Sn_y)O_3$ (0.995≤m≤1.010, 0≤x≤0.10, 0<y≤0.20), or a combination thereof.

The subcomponent may include Ge, Zr, Mn, Cr, Si, Al, Mg, Sn, Sb, Hf, Ga, In, La, Y, Ac, Ce, Pr, Nd, Pm, Sm, Eu, Gd, Tb, Dy, Ho, Er, Tm, Yb, Lu, or a combination thereof.

The plurality of dielectric crystal grains may further include Ge, Ge oxide, or a combination thereof.

The internal electrode may include a conductive metal and Ge.

The internal electrode may include an alloy including a conductive metal and Ge.

The external electrode may include a sintered metal layer in contact with the capacitor body, and the sintered metal layer may include a conductive metal and Ge.

An average thickness of the internal electrode may be about 0.05 $\mu$m to about 2 $\mu$m.

An average thickness of the dielectric layer may be about 0.05 $\mu$m to about 10 $\mu$m.

A multilayered ceramic capacitor according to yet another embodiment includes a capacitor body including a dielectric layer and an internal electrode, and an external electrode disposed on an outer surface of the capacitor body, wherein the dielectric layer comprises Ti and Ge, and the internal electrode comprises Ni and Ge, when an average content (mole) of Ge in the internal electrode relative to 100 moles of Ni in the internal electrode is X, an average content (mole) of Ge in the dielectric layer relative to 100 moles of Ti in the dielectric layer is Y, and a relationship between X and Y satisfies Equation 1:

[Equation 1]

$$X/Y \geq 1.$$

The dielectric layer may include Ge in a form of Ge oxide, and the internal electrode include Ge in a form of an alloy.

In the multilayered ceramic capacitor, a content of Ge based on 100 moles of Ti may be about 0.01 moles to about 20 moles.

The external electrode may include Ge.

A method of manufacturing a multilayered ceramic capacitor according to still another embodiment includes applying a conductive paste on a dielectric green sheet to form an electrode pattern on the dielectric green sheet, stacking a plurality of the dielectric green sheets on which the electrode pattern is formed to form a dielectric green sheet stack, and sintering the dielectric green sheet stack at an oxygen partial pressure of about $1.0 \times 10^{-14}$ MPa to about $1.0 \times 10^{-10}$ MPa to form a capacitor body.

The method may further include annealing the capacitor body at an oxygen partial pressure of about $1.0 \times 10^{-9}$ MPa to about $1.0 \times 10^{-5}$ MPa.

The conductive paste may include Ge oxide and/or an alloy that includes Ge.

The multilayered ceramic capacitor may include Ti, and in the multilayered ceramic capacitor, a content of Ge based on 100 moles of Ti may be about 0.01 moles to about 20 moles.

The multilayered ceramic capacitor according to the embodiment has the advantages of improved capacitance, reliability, and temperature characteristics.

However, the various and beneficial advantages and effects of the present disclosure are not limited to the aforementioned descriptions, and may be more easily understood in the process of explaining specific embodiments of the present disclosure.

## BRIEF DESCRIPTION OF THE DRAWINGS

FIG. 1 is a perspective view showing a multilayered ceramic capacitor according to an embodiment.

FIG. 2 is a cross-sectional view of the multilayered ceramic capacitor taken along line I-I' in FIG. 1.

FIG. 3 is an exploded perspective view showing the stacked structure of internal electrodes in the capacitor body of FIG. 1.

## DETAILED DESCRIPTION

Hereinafter, example embodiments of the present disclosure will be described in detail with reference to the accompanying drawings such that those skilled in the art can easily implement them. The drawings and description are to be regarded as illustrative in nature and not restrictive. Like reference numerals designate like elements throughout the specification. Further, the accompanying drawings are provided for helping to easily understand embodiments disclosed in the present specification, and the technical spirit disclosed in the present specification is not limited by the accompanying drawings, and it will be appreciated that the present disclosure includes all of the modifications, equivalent matters, and substitutes included in the spirit and the technical scope of the present disclosure.

Terms including an ordinary number, such as first and second, are used for describing various constituent elements, but the constituent elements are not limited by the terms. The terms are used only to discriminate one constituent element from another constituent element.

When a constituent element is referred to as being "connected" or "coupled" to another constituent element, it will be appreciated that it may be directly connected or coupled to the other constituent element, or face the other constituent element, or intervening other constituent elements may be present. In contrast, when a constituent element is referred to as being "directly connected" or "directly coupled" to another constituent element, it will be appreciated that there are no intervening other constituent elements present.

In the present specification, it will be appreciated that terms "including" and "having" are intended to designate the existence of characteristics, numbers, steps, operations, constituent elements, and components described in the specification or a combination thereof, and do not exclude a possibility of the existence or addition of one or more other characteristics, numbers, steps, operations, constituent elements, and components, or a combination thereof in advance. Accordingly, unless explicitly described to the contrary, the word "comprise," and variations such as "comprises" or "comprising," will be understood to imply the inclusion of stated elements but not the exclusion of any other elements.

As used herein, the terms "about" and "approximately" may provide an industry-accepted tolerance for their corresponding terms and/or relativity between items, such as a tolerance of $\pm$ 1%, $\pm$ 5% , or $\pm$ 10% of the actual value stated, and other suitable tolerances.

Hereinafter, various embodiments and exemplary variations are explained in detail with reference to drawings.

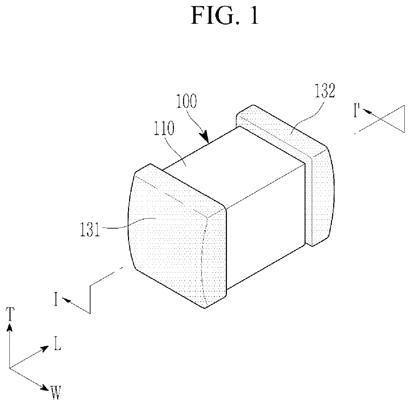

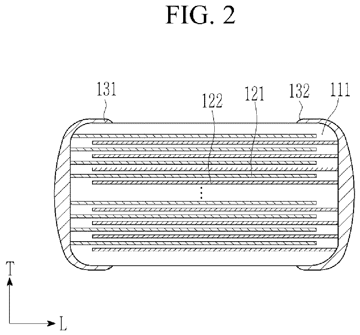

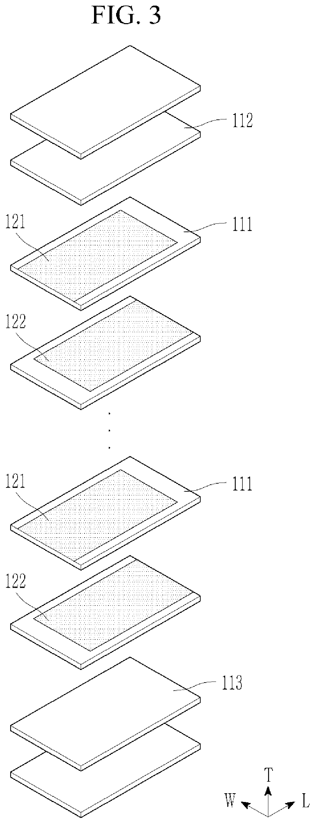

FIG. 1 is a perspective view showing a multilayered ceramic capacitor 100 according to an embodiment, FIG. 2 is a cross-sectional view of the multilayered ceramic capacitor 100 taken along line I-I' of FIG. 1, and FIG. 3 is an exploded perspective view showing the stacked structure of internal electrodes 121 and 122 in the capacitor body of FIG. 1.

To clearly describe the present embodiment, directions are defined as follow: the L axis, the W axis, and the T axis shown in the drawings represent the longitudinal direction, width direction, and thickness direction of the capacitor body 110, respectively. Herein, the thickness direction (T-axis direction) may be a direction perpendicular to wide surfaces (main surfaces) of sheet-shaped constituent elements, and may be used, for example, as the same concept as the stacking direction in which dielectric layers 111 are stacked. The longitudinal direction (L-axis direction) may be a direction extending in parallel with the wide surfaces (main surfaces) of the sheet-shaped constituent elements and be a direction appropriately perpendicular to the thickness direction (T-axis direction), and may be, for example, a direction in which a first external electrode 131 and a second external electrode 132 are positioned on both sides. The width direction (W-axis direction) may be a direction extending in parallel with the wide surfaces (main surfaces) of the sheet-shaped constituent elements and be a direction appropriately perpendicular to the thickness direction (T-axis direction) and the longitudinal direction (L-axis direction), and the lengths of the sheet-shaped constituent elements in the longitudinal direction (L-axis direction) may be longer than their lengths in the width direction (W-axis direction).

Referring to FIGS. 1 to 3, the multilayered ceramic capacitor 100 according to the embodiment may include the capacitor body 110, and the first external electrode 131 and the second external electrode 132 that are disposed on both ends of the capacitor body 110 facing each other in the longitudinal direction (L-axis direction).

A multilayered ceramic capacitor 100 according to an embodiment includes a capacitor body 110 including a dielectric layer 111, and internal electrodes 121 and 122, and external electrodes 131 and 132 arranged on the outside of the capacitor body 110. The multilayered ceramic capacitor 100 includes Ti and Ge, and in the multilayered ceramic capacitor 100, a content of Ge based on 100 moles of Ti is about 0.01 mole to about 20 moles.

The present disclosure has the advantage of improving the capacitance, reliability, and temperature characteristics of a multilayered ceramic capacitor by optimizing the content of Ge in the multilayered ceramic capacitor 100.

If the content of Ge per 100 moles of Ti in the multilayered ceramic capacitor 100 is less than about 0.01 moles, the temperature characteristics of the capacitor cannot be sufficiently improved, and if it exceeds about 20 moles, it may be difficult to sufficiently improve the reliability of the capacitor.

In a multilayered ceramic capacitor 100 according to an embodiment, the dielectric layer 111 includes a plurality of dielectric crystal grains; and a grain boundary between at least two of the dielectric crystal grains, wherein the grain boundary includes Ge, Ge oxide, or a combination thereof.

For example, the dielectric crystal grains may include a main component and a subcomponent, and the dielectric crystal grains may further include Ge, Ge oxide, or a combination thereof. The main components and subcomponents included in the dielectric crystal grains are described below.

For example, the internal electrodes 121 and 122 may include a conductive metal and Ge, and as a specific example, the internal electrodes 121 and 122 may include an alloy of the conductive metal and Ge.

For example, the external electrode may include a sintered metal layer in contact with the capacitor body 110, and the sintered metal layer may include a conductive metal and Ge.

Ge (germanium) is an element with a stronger oxidation tendency than Ni, which is the main material of the internal electrodes 121 and 122.

When such Ge is added to a conductive paste for forming internal electrodes during the manufacture of a multilayered ceramic capacitor and fired in a reducing atmosphere together with Ni, some of the Ge may exist evenly in the form of a Ni-Ge alloy within the internal electrodes 121 and 122.

The Ni-Ge alloy can reduce the grain boundary energy and surface tension of Ni, thereby improving the smoothness and connectivity of the internal electrodes 121 and 122. If the smoothness of the internal electrodes 121 and 122 is improved, the intensity of the electric field applied per dielectric layer may be distributed even if the thickness of the dielectric layer 111 is reduced.

In addition, by alloying Ge, a semi-metal, with Ni, the insulation of the interface between the dielectric layer 111 and the internal electrodes 121 and 122 can be improved, thereby improving reliability. In addition, during the alloying process with Ge, Ni has a delayed sintering rate, which further improves electrode connectivity and enables implementation of a capacitor with higher capacitance.

Additionally, the remaining Ge can diffuse toward the dielectric layer 111 in the form of Ge or Ge oxide ($GeO_2$), and at this time, Ge or Ge oxide can evenly diffuse along the grain boundaries within the dielectric layer 111. Additionally, some of the Ge or Ge oxide may diffuse into the dielectric crystal grains.

At this time, since Ge oxide has a lower melting point than BaTiOs, which is the main component constituting the dielectric crystal grains, Ge oxide can be liquefied during the firing process of the capacitor. The liquefied Ge oxide can increase the dielectric constant of the capacitor by promoting grain growth of dielectric crystals.

In addition, the dielectric crystal grains may have a core-shell structure, and in this case, the liquefied Ge oxide may improve the temperature-dependent capacitance change rate characteristics of the capacitor by increasing the shell fraction within the dielectric crystal grains.

A method for measuring the content of Ge relative to Ti in a multilayered ceramic capacitor 100 is as follows.

First, a sample of a multilayered ceramic capacitor 100 is prepared, 0.1 g of the sample is weighed and placed in a pressure bottle, and a mixture of 6 ml of hydrochloric acid and 2 ml of nitric acid is prepared. The mixture is then heat-treated at about 180 °C for about 1 hour, and the dissolved sample is prepared through additional sonication. After filtering the dissolved sample through a 0.45 $\mu$m filter, the content (weight%) of Ti and Ge in the sample is analyzed using an inductively coupled plasma-optical emission spectrometer (ICP-OES). Then, by converting the weight% of each element into mol%, and then converting the mol% of Ge into per 100 moles of Ti, the Ge content in the multilayered ceramic capacitor 100 can be obtained. Other methods and/or tools appreciated by one of ordinary skill in the art, even if not described in the present disclosure, may also be used.

## Capacitor Body

The capacitor body 110 may have, for example, an approximate hexahedral shape.

In the present embodiment, for ease of explanation, in the capacitor body 110, two surfaces facing each other in the thickness direction (T-axis direction) are defined as a first surface and a second surface, and two surfaces that are coupled to the first surface and the second surface and face each other in the longitudinal direction (L-axis direction) are defined as a third surface and a fourth surface, and two surfaces that are coupled to the first surface and the second surface, are coupled to the third surface and the fourth surface, and face each other in the width direction (W-axis direction) are defined as a fifth surface and a sixth surface.

As an example, the first surface which is the lower surface may be a surface oriented to the mounting direction. Further, the first surface to the sixth surface may be flat; however, the present embodiment is not limited thereto, and for example, the first surface to the sixth surface may be curved surfaces with convex center portions, and the border of each surface, i.e., the edge may be rounded.

The shape, dimensions, and number of stacked dielectric layers 111 of the capacitor body 110 are not limited to those shown in the drawings of this embodiment.

The capacitor body 110 is formed by stacking a plurality of dielectric layers 111 in the thickness direction (T-axis direction) and firing them, and includes the plurality of dielectric layers 111, and first internal electrodes 121 and second internal electrodes 122 that are alternately disposed in the thickness direction (T-axis direction) with the dielectric layers 111 interposed therebetween.

In this case, adjacent dielectric layers 111 in the capacitor body 110 may be so integrated that it is difficult to see the boundaries between the dielectric layers without the use of a scanning electron microscope (SEM).

Further, the capacitor body 110 may include an active region and cover regions 112 and 113.

The active region is a portion that contributes to the formation of the capacitance of the multilayered ceramic capacitor 100. As an example, the active region may be the region where the first internal electrodes 121 and the second internal electrodes 122 that are stacked along the thickness direction (T-axis direction) overlap.

The cover regions 112 and 113 are margin portions in the thickness direction, and may be positioned on the first surface side and second surface side of the active region in the thickness direction (T-axis direction). These cover regions 112 and 113 may be stacked on the upper surface and lower surface of the active region, respectively, and each may consist of a single dielectric layer 111 or two or more dielectric layers 111.

Also, the capacitor body 110 may further include side cover regions. The side cover regions are margin portions in the width direction, and may be positioned on the fifth surface side and sixth surface side of the active region in the width direction (W-axis direction), respectively. These side cover regions may be formed by stacking dielectric green sheets with conductive paste for forming internal electrodes and firing them. When the conductive paste layers are formed on the surfaces of the dielectric green sheets, the conductive paste may be coated only on some portions of the surfaces of the dielectric green sheets and may not be coated on both side surfaces of the surfaces of the dielectric green sheets.

The cover regions 112 and 113 and the side cover regions serve to prevent damage to the first internal electrodes 121 and the second internal electrodes 122 by physical or chemical stress.

## Dielectric Layer

The dielectric layer 111 may include a dielectric, and the dielectric may include a main component and a subcomponent.

The main component is a dielectric matrix, has a high dielectric constant, and contributes to forming a dielectric constant of the multilayered ceramic capacitor 100.

The dielectric layer 111 may include a plurality of dielectric crystal grains; and a grain boundary between at least two of the dielectric crystal grains, wherein the grain boundary includes Ge, Ge oxide, or a combination thereof.

For example, the dielectric crystal grains may include a main component and a subcomponent, and the dielectric crystal grains may further include Ge, Ge oxide, or a combination thereof.

For example, the main component may be a barium titanate-based compound, and may be a dielectric material including, for example, $Ba_mTiO_3$ ($0.995 \leq m \leq 1.010$), $(Ba_{1-x}Ca_x)_m(Ti_{1-y}Zr_y)O_3$ ($0.995 \leq m \leq 1.010$, $0 \leq x \leq 0.10$, $0 < y \leq 0.20$), $Ba_m(Ti_{1-x}Zr_x)O_3$ ($0.995 \leq m \leq 1.010$, $x \leq 0.10$), $(Ba_{1-x}Ca_x)_m(Ti_{1-y}Sn_y)O_3$ ($0.995 \leq m \leq 1.010$, $0 \leq x \leq 0.10$, $0 < y \leq 0.20$), or a combination thereof.

As an example, the main component may include BaTiOs, Ba(Ti, Zr)Os, Ba(Ti, Sn)$O_3$, (Ba, Ca)TiO$_3$, (Ba, Ca)(Ti, Zr)Os, (Ba, Ca)(Ti, Sn)Os, (Ba, Sr)TiO$_3$, (Ba, Sr)(Ti, Zr)Os, (Ba, Sr)(Ti, Sn)Os, or a combination thereof.

For example, the subcomponent may include germanium (Ge), dysprosium (Dy), vanadium (V), manganese (Mn), chromium (Cr), silicon (Si), aluminum (Al), magnesium (Mg), tin (Sn), antimony (Sb), gallium (Ga), indium (In), barium (Ba), lanthanum (La), yttrium (Y), actinium (Ac), cerium (Ce), praseodymium (Pr), neodymium (Nd), promethium (Pm), samarium (Sm), europium (Eu), gadolinium (Gd), terbium (Tb), holmium (Ho), erbium (Er), thulium (Tm), ytterbium (Yb), lutetium (Lu), hafnium (Hf), or a combination thereof.

The dielectric may further include a ceramic additive, an organic solvent, a binder, a dispersant, or a combination thereof.

For example, at least one of the plurality of dielectric crystal grains may have a core-shell structure.

A dielectric crystal grain having a core-shell structure includes a dielectric core and a shell surrounding at least a portion of the core within one dielectric crystal grain. For example, Ge or Ge oxide may be mainly included in grain boundaries, but some of it may diffuse and be located into the shell within the dielectric crystal grains.

The core and shell have different molar ratios of the subcomponent to the main component, and for example, the molar ratio of the subcomponent to the main component may change drastically at the boundary between the core and shell. Accordingly, the boundary between the core and shell may be easily distinguished and confirmed through transmission electron microscopy-energy-dispersive X-ray analysis (TEM-EDS).

For example, the core may include no or only trace amounts of subcomponents. Therefore, the core may be composed of only pure main components without impurities, and pure main components may generally have higher dielectric constant than main components doped with impurity elements. Accordingly, the core may perform the role of maintaining the dielectric constant.

The shell includes more subcomponents than the core. The subcomponent doped into the B-site of the main component (perovskite ABOs structure) in the shell has the effect of increasing the band gap energy through which other rare earth elements and doping elements diffuse into the dielectric crystal grains. Accordingly, it can act as a barrier to suppress diffusion of other rare earth and doping elements into the dielectric crystal grains. The shell can play a role in suppressing the growth of dielectric crystal grains, thereby contributing to the refinement of dielectric crystal grains. Additionally, the subcomponent doped into the A-site of the main component in the shell may play a role in improving reliability and dielectric constant.

For example, the average thickness of the dielectric layer 111 may be greater than or equal to about 0.05 $\mu$m, greater than or equal to about 0.1 $\mu$m, or greater than or equal to about 0.2 $\mu$m, and less than or equal to about 10 $\mu$m, less than or equal to about 5 $\mu$m, less than or equal to about 2.5 $\mu$m, or less than or equal to about 2.0 $\mu$m.

The average thickness of the dielectric layer 111 may be measured by the following method.

First, a scanning electron microscope (SEM) image obtained by observing a cross-sectional sample with a scanning electron microscope is prepared.

It may be an arithmetic mean value of the thicknesses of the dielectric layer 111 at 10 points spaced at predetermined intervals from a reference point in the SEM image of the cross-sectional sample, when the center point in the length direction (L-axis direction) or the width direction (W-axis direction) of the dielectric layer 111 is used as a reference point.

The intervals between the 10 points may be adjusted according to the scale of the SEM image, and may be, for example, an interval of about 1 $\mu$m to about 100 $\mu$m, about 1 $\mu$m to about 50 $\mu$m, or about 1 $\mu$m to about 10 $\mu$m.

In this case, all 10 points should be located within the dielectric layers 111, and when all 10 points are not located within the dielectric layers 111, the position of the reference point may be changed or the interval of 10 points may be adjusted. Other methods and/or tools appreciated by one of ordinary skill in the art, even if not described in the present disclosure, may also be used.

### Internal Electrode

The internal electrode may include a first internal electrode 121 and a second internal electrode 122. The first internal electrode 121 and the second internal electrode 122 are electrodes having different polarities and are alternately arranged to face each other along the T-axis direction with the dielectric layer 111 interposed between them, and one end can be exposed through the third and fourth surfaces of the capacitor body 110, respectively.

The first internal electrodes 121 and the second internal electrodes 122 may be electrically insulated from each other by the dielectric layers 111 disposed therebetween.

The end portions of the first internal electrodes 121 and the second internal electrodes 122 that are alternately exposed from the third and fourth surfaces of the capacitor body 110 may be electrically coupled to the first external electrode 131 and the second external electrode 132, respectively.

In an embodiment, the first internal electrode 121 and the second internal electrode 122 may include a conductive metal and Ge, and as a specific example, may include an alloy of the conductive metal and Ge.

For example, the conductive metal may further include a metal such as Ni, Cu, Ag, Pd, or Au, or an alloy thereof, for example, an Ag-Pd alloy. For example, when the conductive metal is Ni, the first internal electrode 121 and the second internal electrode 122 may include Ni and Ge, and may include, for example, a Ni-Ge alloy.

Also, the first internal electrodes 121 and the second internal electrodes 122 may include dielectric particles of the same composition system as that of the ceramic material that is included in the dielectric layers 111.

The first internal electrode 121 and the second internal electrode 122 may be formed using a conductive paste including a conductive metal and Ge. The printing method of the conductive paste may use a screen-printing method, a gravure printing method, or the like.

In an embodiment, the dielectric layer 111 may include Ti and Ge, and the internal electrodes 121 and 122 may include Ni and Ge, and when the average content (mole) of Ge relative to 100 moles of Ni in the internal electrodes 121 and 122 is X, and the average content (mole) of Ge relative to 100 moles of Ti in the dielectric layer 111 is Y, a relationship between X and Y may satisfy Equation 1.

[Equation 1]

$$X/Y \geq 1$$

For example, in Inequation 1, X/Y may be greater than about 1, for example, greater than or equal to about 1.4, or greater than or equal to about 1.6.

In Inequation 1, when the X/Y value is less than about 1, a larger amount of Ge exists in the dielectric layer than in the internal electrode, which may cause problems such as a decrease in dielectric constant.

For example, X may be about 0.1 moles to about 15 moles. As a specific example, X may be greater than or equal to about 0.25 moles, or greater than or equal to about 0.5 moles, and may be less than or equal to about 10 moles, less than or equal to about 5 moles, or less than or equal to about 3 moles.

For example, Y may be about 0.05 moles to about 10 moles. As a specific example, Y may be greater than or equal to about 0.1 moles, may be greater than or equal to about 0.2 moles, or may be greater than or equal to about 0.3 moles, and may be less than or equal to about 5 moles, less than or equal to about 2.5 moles, less than or equal to about 2 moles, or less than or equal to about 1.4 moles.

When the above numerical ranges are satisfied, a multilayered ceramic capacitor with improved capacitance, reliability, and temperature characteristics can be implemented.

The method to obtain the above X and Y values is as follows.

First, the multilayered ceramic capacitor 100 is placed in an epoxy mixture and cured, and the L-axis and T-axis direction sides of the capacitor body 110 are polished to 1/2 the point in a W-axis direction, then placed in a vacuum atmosphere chamber, and then, cut in the L-axis direction and the T-axis direction from the center of the W-axis direction of the capacitor body 110 to prepare a cross-sectional sample.

Then, after preparing a TEM image of a cross-sectional sample, five or more random dielectric layers 111 and five or more random internal electrodes 121 and 122 are selected from the image.

Then, five equally spaced points corresponding to the centers of the selected dielectric layers 111, respectively, are selected, and the contents (moles) of Ti and Ge are measured through TEM (Transmission Electron Microscope)-EDS (Energy Disperse X-Ray Spectrometer) analysis at the selected points, and the arithmetic mean value of the measured values is calculated to obtain the Y value. Other methods and/or tools appreciated by one of ordinary skill in the art, even if not described in the present disclosure, may also be used.

In addition, five equally spaced points corresponding to the centers of the selected internal electrodes 121 and 122, respectively, are selected, and the contents (moles) of Ni and Ge are measured through TEM-EDS analysis at the selected points, and the arithmetic mean value of the measured values is calculated to obtain the X value. Other methods and/or tools appreciated by one of ordinary skill in the art, even if not described in the present disclosure, may also be used.

For example, the center of the dielectric layer 111 may mean a midpoint between a point on one surface of the dielectric layer 111 and a point on the other surface of the dielectric layer 111 located at the shortest distance from the point in the L-axis direction and the T-axis direction in a cross-section cut from the center of the W-axis direction of the capacitor body 110. It can also mean not only the midpoint, but also the area within ±30% in the T-axis direction based on the midpoint.

For example, the center of the internal electrodes 121 and 122 may mean a midpoint between a point on one surface of the internal electrodes 121 and 122 and a point on the other surface of the internal electrodes 121 and 122 located at the shortest distance from the point in the L-axis direction and the T-axis direction in a cross-section cut from the center of the W-axis direction of the capacitor body 110. It can also mean not only the midpoint, but also the area within ±30% in the T-axis direction based on the midpoint.

For example, the average thickness of the first internal electrode 121 and the second internal electrode 122 may be greater than or equal to about 0.05 $\mu$m, greater than or equal to about 0.1 $\mu$m, greater than or equal to about 0.2 $\mu$m, or greater than or equal to about 0.25 $\mu$m, and may be less than or equal to about 2 $\mu$m, greater than or equal to about 1 $\mu$m, greater than or equal to about 0.5 $\mu$m, greater than or equal to about 0.4 $\mu$m, or greater than or equal to about 0.3 $\mu$m.

The average thickness of the first internal electrode 121 or the second internal electrode 122 may be measured by the following method.

It may be an arithmetic mean value of the thicknesses of the first internal electrode 121 or the second internal electrode 122 at 10 points spaced at predetermined intervals from a reference point in the SEM image of the cross-sectional sample, when the center point in the length direction (L-axis direction) or the width direction (W-axis direction) of the first internal electrode 121 or the second internal electrode 122 is used as a reference point.

The intervals between the 10 points may be adjusted according to the scale of the SEM image, and may be, for example, an interval of about 1 $\mu$m to about 100 $\mu$m, about 1 $\mu$m to about 50 $\mu$m, or about 1 $\mu$m to about 10 $\mu$m.

In this case, all 10 points should be located within the first internal electrode 121 or the second internal electrode 122, and when all 10 points are not located within the first internal electrode 121 or the second internal electrode 122, the position of the reference point may be changed or the interval of 10 points may be adjusted. Other methods and/or tools appreciated by one of ordinary skill in the art, even if not described in the present disclosure, may also be used.

**External Electrode**

The first external electrode 131 and the second external electrode 132 may receive voltages of different polarities, and may be electrically connected to the exposed portions of the first internal electrodes 121 and the second internal electrodes 122, respectively.

According to the above configuration, when a predetermined voltage is applied between the first external electrode 131 and the second external electrode 132, charge is accumulated between the first internal electrodes 121 and the second internal electrodes 122 facing each other. At this time, the capacitance of the multilayered ceramic capacitor 100 becomes proportional to the overlapped area of the first internal electrodes 121 and the second internal electrodes 122 overlapping each other along the T-axis direction in the active region.

The first external electrode 131 and the second external electrode 132 may be disposed on the third and fourth surfaces of the capacitor body 110, respectively, and may include first and second connection portions, respectively, that are coupled to the first internal electrodes 121 and the second internal electrodes 122, respectively, and include first and second band portions, respectively, that are disposed at the edges where the third and fourth surfaces of the capacitor body 110 meet either the first and second surfaces or the fifth and sixth surfaces.

The first and second band portions may extend from the first and second connection portions to some points of either the first and second surfaces or fifth and sixth surfaces of the capacitor body 110. The first and second band portions may serve to improve the adhesion strength of the first external electrode 131 and the second external electrode 132.

As an example, each of the first external electrode 131 and the second external electrode 132 may include a sintered metal layer that is in contact with the capacitor body 110, a conductive resin layer that is disposed to cover the sintered metal layer, and a plating layer that is disposed to cover the conductive resin layer.

The sintered metal layer may include a conductive metal and Ge, and as an example, the sintered metal layer may include an alloy of the conductive metal and Ge.

The sintered metal layer may include a conductive metal such as copper (Cu), nickel (Ni), silver (Ag), palladium (Pd), gold (Au), platinum (Pt), tin (Sn), tungsten (W), titanium (Ti), lead (Pb), an alloy thereof, or a combination thereof, and copper (Cu) may include for example a copper (Cu) alloy. For example, when the conductive metal is Cu, the sintered metal layer may include Cu and Ge, and may include, for example, a Cu-Ge alloy. Additionally, when the conductive metal includes copper, a metal other than copper may be included in an amount of less than or equal to about 5 moles based on 100 moles of copper.

For example, the sintered metal layer may further include glass. As an example, the sintered metal layer may include a composition including oxides as glass, and may include, for example, one or more selected from silicon oxides, boron oxides, aluminum oxides, transition metal oxides, alkali metal oxides, and alkaline earth metal oxides. The transition metal may be selected from zinc (Zn), titanium (Ti), copper (Cu), vanadium (V), manganese (Mn), iron (Fe), and nickel (Ni), and the alkali metal may be selected from lithium (Li), sodium (Na), and potassium (K), and the alkaline earth metal may be one or more selected from magnesium (Mg), calcium (Ca), strontium (Sr), and barium (Ba).

Optionally, the conductive resin layer is formed on the sintered metal layer, and for example, may be formed to completely cover the sintered metal layer. Meanwhile, the first external electrode 131 and the second external electrode 132 may not include a sintered metal layer, and in this case, the conductive resin layer may be in direct contact with the capacitor body 110.

The conductive resin layers may extend to the first and second surfaces or fifth and sixth surfaces of the capacitor body 110, and the lengths of regions (i.e., band portions) where the conductive resin layers extend to the first and second surfaces or fifth and sixth surfaces of the capacitor body 110 may be longer than the lengths of regions (i.e., band portions) where the sintered metal layers extend in the first and second surfaces or fifth and sixth surfaces of the capacitor body 110. In other words, the conductive resin layers may be formed on the sintered metal layers, and may be formed so as to completely cover the sintered metal layers.

The conductive resin layers include a resin and a conductive metal.

The resin which is included in the conductive resin layers is not particularly limited as long as it has a bonding property and an impact absorption property and can be mixed with conductive metal powder to form a paste, and may include, for example, a phenolic resin, an acrylic resin, a silicone resin, an epoxy resin, or a polyimide resin.

The conductive metal that is included in the conductive resin layers serves to electrically connect the conductive resin layers to the first internal electrode 121 and the second internal electrode 122, or the sintered metal layer.

The conductive metal that is included in the conductive resin layer may have a spherical shape, a flake shape, or a combination thereof. In other words, the conductive metal may be formed only in a flake shape, or may be formed only in a spherical shape, or may be the form of a mixture of a flake shape and a spherical shape.

Herein, the spherical shape may include a shape which is not completely spherical, and may include, for example, a shape in which a ratio of the length of the major axis to the length of the minor axis (major axis/minor axis) may be less than or equal to about 1.45. The flake-type powder refers to a powder with a flat and elongated shape, and is not particularly limited, but for example, a ratio of the length of the major axis to the length of the minor axis (major axis/minor axis) may be greater than or equal to about 1.95.

The first external electrode 131 and the second external electrode 132 may further include a plating layer disposed on the outside of the conductive resin layer.

The plating layer may include nickel (Ni), copper (Cu), tin (Sn), palladium (Pd), platinum (Pt), gold (Au), silver (Ag), tungsten (W), titanium (Ti), or lead (Pb) which may be included alone or alloys thereof. As an example, each plating layer may be a nickel (Ni) plating layer or a tin (Sn) plating layer, or may be a form in which a nickel (Ni) plating layer and a tin (Sn) plating layer are sequentially stacked, or may be a form in which a tin (Sn) plating layer, a nickel (Ni) plating layer, and a tin (Sn) plating layer are sequentially stacked. Alternatively, each plating layer may include a plurality of nickel (Ni) plating layers and/or a plurality of tin (Sn) plating layers.

The plating layer can improve mountability to the substrate, structural reliability, durability to the outside, heat resistance, and equivalent series resistance (ESR) of the multilayered ceramic capacitor 100.

## Method of Manufacturing Multilayered Ceramic Capacitor

A method of manufacturing the multilayered ceramic capacitor according to another embodiment includes manufacturing a capacitor body including a dielectric layer and an internal electrode and then, forming an external electrode on the outside of the capacitor body.

First, the manufacturing the capacitor body is illustrated.

In the manufacturing process of the capacitor body, a dielectric paste, which will be formed into a dielectric layer after sintering, and a conductive paste, which will be formed into an internal electrode after the sintering, are prepared.

The dielectric paste is, for example, prepared in the following method. Dielectric powders are uniformly mixed through wet mixing and the like, dried, and heat-treated under predetermined conditions obtain plasticized powder. Subsequently, an organic vehicle or an aqueous vehicle is added to the plasticized powder and additionally, kneaded to prepare the dielectric paste.

The obtained dielectric paste is formed into a dielectric green sheet by using a technique such as the doctor blade method. Additionally, the dielectric paste may include additives selected from various dispersants, plasticizers, dielectrics, subcomponent compounds, or glass, if necessary.

The conductive paste for internal electrodes may be prepared by kneading a conductive powder made of a conductive metal or an alloy with a binder or solvent.

As an example, the conductive paste for the internal electrode may be manufactured including Ge. For example, the conductive paste for the internal electrode may be manufactured including a Ni-Ge alloy, or may be manufactured including a $GeO_2$ powder.

The conductive paste for the internal electrode may include ceramic powder (e.g., barium titanate powder) as a co-material, if necessary. The co-material may act to inhibit the sintering of the conductive powder during the sintering process.

On the surface of the dielectric green sheet, a conductive paste for internal electrodes is coated in a predetermined pattern using various printing methods such as screen printing or a transfer method. Then, a dielectric green sheet stack is obtained by stacking multiple layers of dielectric green sheets forming internal electrode patterns and then pressing them in the stacking direction. At this time, the dielectric green sheets and the internal electrode pattern may be stacked so that the dielectric green sheets are positioned on the upper and lower surfaces of the dielectric green sheet stack in the stacking direction.

Optionally, the obtained dielectric green sheet stack may be cut into a predetermined size by dicing or the like.

In addition, the dielectric green sheet stack, if necessary, may be solidified and dried to remove the plasticizer and the like and then, barrel-polished by using a horizontal centrifugal barrel machine, etc. In the barrel-polishing, unnecessary parts such as burrs, etc., which are generated during the cutting, may be polished by inserting the dielectric green sheet stack with media and a polishing solution into a barrel container and then, applying rotational motion, vibration, or the like to the barrel container. In addition, after the barrel-polishing, the dielectric green sheet stack may be washed with a cleaning solution such as water and the like and dried.

The dielectric green sheet stack is subjected to binder removal and sintering treatments to obtain a capacitor body.

The binder removal treatment is performed under conditions appropriately adjusted according to a main component composition of the dielectric layer and a main component composition of the internal electrode. For example, the binder removal treatment is performed by increasing a temperature at about 5 °C/hour to about 300 °C/hour and maintained at a support temperature of about 180 °C to about 400 °C for about 0.5 hour to about 24 hours. The binder removal is performed under an air or reducing atmosphere.

The sintering treatment may be performed under conditions appropriately adjusted according to a main component composition of the dielectric layer or a main component composition of the internal electrode. For example, the sintering treatment may be performed at about 1200 °C to about 1350 °C or about 1220 °C to about 1300 °C for about 0.5 hour to about 8 hours or about 1 hour to about 3 hours. The sintering treatment is performed under a reducing atmosphere, for example, under an atmosphere in which a mixed gas of nitrogen gas ($N_2$) and hydrogen gas ($H_2$) is humidified. When the internal electrode includes nickel (Ni) or a nickel (Ni) alloy, the oxygen partial pressure in the sintering atmosphere may be about $1.0\times10^{-14}$ MPa to about $1.0\times10^{-10}$ MPa.

After the sintering treatment, annealing may be performed. Because the annealing is a treatment to reoxidize the dielectric layer, if the sintering is performed under the reducing atmosphere, the annealing may be performed. The annealing treatment is performed under conditions appropriately adjusted according to a main component composition of the dielectric layer and the like. For example, the annealing treatment may be performed at about 950 °C to about 1150 °C for about 0 hour to about 20 hours at about 50 °C/hour to about 500 °C/hour. The annealing may be performed under a humidified nitrogen gas ($N_2$) atmosphere at an oxygen partial pressure of about $1.0\times10^{-9}$ MPa to about $1.0\times10^{-5}$ MPa.

The humidifying nitrogen gas, mixed gas, or the like in the binder removal treatment, the sintering treatment, or the annealing treatment may be performed, for example, by using a wetter and the like, wherein a temperature of water used therein may be at about 5 °C to about 75 °C. The binder removal treatment, the sintering treatment, and the annealing treatment may be performed sequentially or independently.

Optionally, the third and fourth surfaces of the capacitor body may be subjected to surface treatment such as sand blasting, laser irradiation, or barrel polishing. This surface treatment may expose ends of the first and second internal electrodes onto the outermost surfaces of the third and fourth surfaces, which may solidify electrical bonding between the first and second external electrodes and the first and second internal electrodes and easily forming alloy portions.

Subsequently, a paste for forming a sintered metal layer is coated on the outside of the obtained capacitor body and sintered to form sintered metal layers as the external electrodes.

The paste for forming a sintered metal layer may include a conductive metal and glass. The conductive metal and the glass are the same as aforementioned above and thus will not be repetitively mentioned. In addition, the paste for forming a sintered metal layer may optionally include a subcomponent such as a binder, solvent, dispersant, plasticizer, or oxide powder. For example, the binder may be ethylcellulose, acrylic, or butyral, and the solvent may be an organic solvent such as terpineol, butyl carbitol, alcohol, methyl ethyl ketone, acetone, or toluene, or an aqueous solvent.

A method of coating the paste for forming a sintered metal layer on the outside of the capacitor body may include various printings such as dipping, or screen printing and the like, coating by using a dispenser, etc., or spraying using a spray, and the like. The paste for forming a sintered metal layer is coated at least on the third and fourth surfaces of the capacitor body and optionally, each portion of the first surface, the second surface, the fifth surface, or the sixth surface where band portions of the first and second external electrodes are formed.

Subsequently, the capacitor body, which is coated with the paste for forming a sintered metal layer, is dried and sintered at about 700 °C to about 1000 °C for about 0.1 hour to about 3 hours to form the sintered metal layers.

Optionally, on the outside of the obtained capacitor body, a paste for forming a conductive resin layer is coated and cured to form a conductive resin layer.

The paste for forming the conductive resin layer may include a resin and, optionally, a conductive metal or a non-conductive filler. Because the descriptions of the conductive metal and resin are the same as described above, repetitive description will be omitted. Additionally, the paste for forming the conductive resin layer may optionally include a subcomponent such as a binder, solvent, dispersant, plasticizer, or oxide powder. For example, the binder may be ethylcellulose, acrylic, or butyral, and the solvent may be an organic solvent such as terpineol, butyl carbitol, alcohol, methyl ethyl ketone, acetone, or toluene, or an aqueous solvent.

For example, a method of forming the conductive resin layer may include dipping the capacitor body 110 in the paste for forming a conductive resin layer and curing it, or printing the paste for forming a conductive resin layer on the surface of the capacitor body 110 in screen printing, gravure printing, etc. or coating and coating the paste for forming a conductive resin layer on the surface of the capacitor body 110 and then, curing it.

Subsequently, the plating layer is formed on the outside of the conductive resin layer.

For example, the plating layer may be formed in a plating method, for example, by sputtering or electric deposition.

Hereinafter, specific examples of the disclosure will be presented. However, the following examples are intended only to specifically illustrate or describe the disclosure, and should not be construed as limiting the scope of the disclosure.

(Examples)

## Example 1

A multilayered ceramic capacitor of Example 1 was manufactured by weighing Ge so that a Ge content in the multilayered ceramic capacitor was 0.05 mol per 100 mols of Ti and adjusting an oxygen partial pressure condition.

The Ge content in the multilayered ceramic capacitor was measured in the following method.

First, the multilayered ceramic capacitor according to Example 1 was prepared as a sample, and then, 0.1 g of the sample was weighed and placed in a pressure bottle, and 6 ml of hydrochloric acid and 2 ml of nitric acid were added thereto to prepare a mixture. The mixture was heat-treated at about 180 °C for about 1 hour and additionally ultrasonicated to prepare a dissolved sample. The dissolved sample was filtered with a 0.45 $\mu$m filter and analyzed with respect to Ti and Ge contents (wt%) by using an inductively coupled plasma-optical emission spectrometer (ICP-OES). After converting wt% of each element to mol%, mol% of Ge was converted based on 100 mols of Ti to obtain the Ge content in the multilayered ceramic capacitor.

For reference, the multilayered ceramic capacitors according to Examples 2 to 4 were respectively measured with respect to wt% of each Ni, Ba, Ti, and Ge element in the ICP-OES analysis method, and the results are shown in Table 2. After converting wt% of each element to mol%, mol% of Ge was converted based on 100 mols of Ti and then, provided as 'the Ge content (mols/100 mols of Ti) in the multilayered ceramic capacitor' in Table 1.

In addition, the multilayered ceramic capacitors according to Examples 1 and 2 were measured with respect to an average content (mol) of Ge based on 100 mols of Ni and in an internal electrode and an average content (mol) of Ge based on 100 mols of Ni in a dielectric layer, and the results are shown in Table 3.

The average contents of Ge in the internal electrode and the dielectric layer may be obtained in the following method.

First, after curing the multilayered ceramic capacitor according to Example 1 by placing it in an epoxy mixture, the L-axis and T-axis direction sides of the capacitor body are polished to the 1/2 point in a W-axis direction, and then, cut in the L-axis direction and the T-axis direction from the center of the W-axis direction of the capacitor body to prepare a cross-sectional sample.

Then, after preparing a TEM image of the cross-sectional sample, any 5 or more dielectric layers and internal electrodes were respectively selected from the image.

Subsequently, 5 points at equal intervals corresponding to the centers of the selected dielectric layers, respectively, were selected and measured with respect to Ti and Ge contents (mols) through TEM (Transmission Electron Microscope)-EDS (Energy Disperse X-Ray Spectrometer) analysis, and then, an arithmetic mean of the measurements were calculated to obtain Y.

In addition, 5 points at equal intervals corresponding to the centers of the selected internal electrodes, respectively, were selected to measure Ni and Ge contents (mols) through TEM-EDS analysis, and then, an arithmetic mean of the measurements was calculated to obtain X.

Examples 2 to 9 and Comparative Examples 1 to 3

Each multilayered ceramic capacitors according to Examples 2 to 9 and Comparative Examples 1 to 3 was manufactured by weighing Ge in a molar content as shown in Table 1 and adjusting oxygen partial pressure conditions.

(Evaluation Examples)

**Evaluation Example 1: Capacitance Measurement**

The multilayered ceramic capacitors according to Examples 1 to 9 and Comparative Examples 1 to 3 were measured with respect to capacitance under the conditions of 1 kHz and AC 0.5 V by using a LCR meter.

The capacitance of Comparative Example 1 as a reference value of 1 was used to calculate relative values of the other examples and comparative examples were calculated, and the results are shown in Table 1.

**Evaluation Example 2: MTTF (Mean Time To Failure) Measurement**

The multilayered ceramic capacitors according to Examples 1 to 9 and Comparative Examples 1 to 3 were measured with respect to MTTF (Mean Time To Failure) by performing a high-temperature load test under the conditions of 125 °C and 8 V.

Herein, time to failure was time when insulation resistance became 10 k$\Omega$ or less, and MTTF of Comparative Example 1 as a reference value of 1 was used to calculate relative values of the other examples and comparative examples were calculated, and the results are shown in Table 1.

**Evaluation Example 3: Evaluation of Satisfaction with Temperature Characteristics**

The multilayered ceramic capacitors according to Examples 1 to 9, and Comparative Examples 1 to 3 were measured with respect to a capacity change rate by increasing a temperature by 1 °C from -55 °C to 85 °C. Specifically, after maintaining the multilayered ceramic capacitors for 1 minute under the conditions of 1 kHz, 0.1 Vrms, and AC to measure capacitance, a capacitance change rate at each temperature was calculated according to Equation 2 based on 25 °C.

Capacitance change rate at T °C(%) = {(C[T °C] - C[25 °C])/C[25 °C]} $\times$ 100 [Equation 2]

* C[T °C] = Capacitance measured at T °C

If the capacitance change rates at each temperature calculated according to Equation 2 were all within $\pm 15\%$, O (pass) was given, but if any of the capacity change rates at each temperature calculated according to Equation 2 were not within $\pm 15\%$, X (fail) was given, and the results are shown in Table 1.

(Table 1)

| | Ge content in multilayered ceramic capacitor (mole/Ti 100 moles) | Capac itance | MTTF | Temperature characteristic is satisfied |
|---|---|---|---|---|
| Comparative Example 1 | 0 | 1 | 1 | X |
| Example 1 | 0.05 | 1.01 | 1.06 | O |
| Example 2 | 0.47 | 1.03 | 1.1 | O |
| Example 3 | 0.76 | 1.04 | 1.15 | O |
| Example 4 | 1.14 | 1.04 | 1.27 | O |
| Example 5 | 3.5 | 1.09 | 1.35 | O |
| Example 6 | 5.1 | 1.12 | 1.67 | O |
| Example 7 | 8.3 | 1.11 | 1.45 | O |
| Example 8 | 16.3 | 1.08 | 1.20 | O |
| Example 9 | 19.5 | 1.05 | 1.12 | O |
| Comparative Example 2 | 20.7 | 1.04 | 0.95 | O |
| Comparative Example 3 | 23.1 | 1.01 | 0.86 | O |

Referring to Table 1, the multilayered ceramic capacitors of Examples 1 to 9, which had a Ge content of about 0.01 mole to about 20 moles based on 100 mols of Ti, exhibited higher capacitance than that of Comparative Example 1 but larger MTTF than that of Comparative Example 1, thereby exhibiting high reliability and all excellent temperature characteristics.

On the other hand, Comparative Example 1, which had less than 0.01 mol of a Ge content based on 100 mols of Ti in the multilayered ceramic capacitor, was confirmed to exhibit all deteriorated capacitance characteristics, reliability, and temperature characteristics, compared with the examples.

In addition, Comparative Examples 2 and 3, which had greater than 20 mols of a Ge content based on 100 mols of Ti in the multilayered ceramic capacitors, compared with the examples, exhibited low MTTF and deteriorated reliability.

(Table 2)

| | Ni (wt%) | Ba (wt%) | Ti (wt%) | Ge (wt%) |
|---|---|---|---|---|
| Example 2 | 44.0 | 30.0 | 10.3 | 0.074 |
| Example 3 | 43.6 | 29.6 | 10.4 | 0.12 |
| Example 4 | 43.4 | 29.7 | 10.4 | 0.1805 |

(Table 3)

| | Example 1 | Example 2 |
|---|---|---|
| Average Ge content relative to 100 moles of Ni in the internal electrode (moles, X) | 0.5 | 3 |
| Average Ge content relative to 100 moles of Ti in the dielectric layer (moles, Y) | 0.3 | 1.4 |
| X/Y | 1.67 | 2.14 |

Referring to Tables 1 and 3, the multilayered ceramic capacitors of Examples 1 and 2 were all confirmed to exhibit X/Y of 1 or more, thereby all achieving excellent capacitance characteristics, reliability, and temperature characteristics.

While this disclosure has been described in connection with what is presently considered to be practical example embodiments, it is to be understood that the disclosure is not limited to the disclosed example embodiments. On the contrary, it is intended to cover various modifications and equivalent arrangements included within the spirit and scope of the appended claims.

**Claims**

1. A multilayered ceramic capacitor, comprising

   a capacitor body including a dielectric layer and an internal electrode, and an external electrode disposed on an outer surface of the capacitor body,
   wherein the multilayered ceramic capacitor comprises Ti and Ge, and in the multilayered ceramic capacitor, a content of Ge based on 100 moles of Ti is about 0.01 moles to about 20 moles.

2. The multilayered ceramic capacitor of claim 1, wherein the dielectric layer comprises Ti and Ge, and the internal electrode comprises Ni and Ge, and

   when an average content (mole) of Ge in the internal electrode relative to 100 moles of Ni in the internal electrode is X, and
   an average content (mole) of Ge in the dielectric layer relative to 100 moles of Ti in the dielectric layer is Y,
   a relationship between X and Y satisfies Equation 1:

$$[\text{Equation 1}]$$

$$X/Y \geq 1.$$

3. The multilayered ceramic capacitor of claim 2, wherein

   X is about 0.1 moles to about 15 moles, and
   Y is about 0.05 moles to about 10 moles.

4. The multilayered ceramic capacitor of claim 1, wherein

   the dielectric layer comprises a plurality of dielectric crystal grains; and a grain boundary between at least two of the plurality of dielectric crystal grains,
   the plurality of dielectric crystal grains comprise a main component and a subcomponent, and
   the main component comprises:

   $Ba_m TiO_3$ (0.995≤m≤1.010),
   $(Ba_{1-x}Ca_x)_m(Ti_{1-y}Zr_y)O_3$ (0.995≤m≤1.010, 0≤x≤0.10, 0<y≤0.20),
   $Ba_m(Ti_{1-x}Zr_x)O_3$ (0.995≤m≤1.010, x≤0.10),
   $(Ba_{1-x}Ca_x)_m(Ti_{1-y}Sn_y)O_3$ (0.995≤m≤1.010, 0≤x≤0.10, 0<y≤0.20), or
   a combination thereof, and.
   the subcomponent comprises Ge, Dy, V, Mn, Cr, Si, Al, Mg, Sn, Sb, Ga, In, Ba, La, Y, Ac, Ce, Pr, Nd, Pm, Sm, Eu, Gd, Tb, Ho, Er, Tm, Yb, Lu, Hf, or a combination thereof.

5. The multilayered ceramic capacitor of claim 1, wherein

   an average thickness of the internal electrode is about 0.05 $\mu$m to about 2 $\mu$m, and
   an average thickness of the internal electrode is about 0.05 $\mu$m to about 10 $\mu$m.

6. A multilayered ceramic capacitor, comprising

   a capacitor body including a dielectric layer and an internal electrode, and an external electrode disposed on an outer surface of the capacitor body,
wherein the multilayered ceramic capacitor comprises Ti and Ge,
in the multilayered ceramic capacitor, a content of Ge based on 100 moles of Ti is about 0.01 moles to about 20 moles,
the dielectric layer comprises a plurality of dielectric crystal grains; and a grain boundary between at least two of the plurality of dielectric crystal grains, and
the grain boundary comprises Ge, Ge oxide, or a combination thereof.

7. The multilayered ceramic capacitor of claim 6, wherein

the plurality of dielectric crystal grains comprise a main component and a subcomponent, and
the main component comprises:

$Ba_mTiO_3$ (0.995≤m≤1.010),
$(Ba_{1-x}Ca_x)_m(Ti_{1-y}Zr_y)O_3$ (0.995≤m≤1.010, 0≤x≤0.10, 0<y≤0.20),
$Ba_m(Ti_{1-x}Zr_x)O_3$ (0.995≤m≤1.010, x≤0.10),
$(Ba_{1-x}Ca_x)_m(Ti_{1-y}Sn_y)O_3$ (0.995≤m≤1.010, 0≤x≤0.10, 0<y≤0.20), or
a combination thereof, and
the subcomponent comprises Ge, Zr, Mn, Cr, Si, Al, Mg, Sn, Sb, Hf, Ga, In, La, Y, Ac, Ce, Pr, Nd, Pm, Sm, Eu, Gd, Tb, Dy, Ho, Er, Tm, Yb, Lu, or a combination thereof.

8. The multilayered ceramic capacitor of claim 7, wherein
the plurality of dielectric crystal grains further comprise Ge, Ge oxide, or a combination thereof.

9. The multilayered ceramic capacitor of claim 6, wherein
the internal electrode comprises a conductive metal and Ge.

10. The multilayered ceramic capacitor of claim 9, wherein
the internal electrode comprises an alloy including the conductive metal and Ge.

11. The multilayered ceramic capacitor of claim 6, wherein

the external electrode comprises a sintered metal layer in contact with the capacitor body, and
the sintered metal layer comprises a conductive metal and Ge.

12. The multilayered ceramic capacitor of claim 6, wherein

an average thickness of the internal electrode is about 0.05 $\mu$m to about 2 $\mu$m, and
an average thickness of the dielectric layer is about 0.05 $\mu$m to about 10 $\mu$m.

13. A multilayered ceramic capacitor, comprising

a capacitor body including a dielectric layer and an internal electrode, and an external electrode disposed on an outer surface of the capacitor body,
wherein the dielectric layer comprises Ti and Ge, and the internal electrode comprises Ni and Ge, and
when an average content (mole) of Ge in the internal electrode relative to 100 moles of Ni in the internal electrode is X, and
an average content (mole) of Ge in the dielectric layer relative to 100 moles of Ti in the dielectric layer is Y,
a relationship between X and Y satisfies Equation 1:

[Equation 1]

$$X/Y \geq 1.$$

14. The multilayered ceramic capacitor of claim 13, wherein the dielectric layer comprises Ge in a form of Ge oxide, and the internal electrode comprises Ge in a form of an alloy.

**15.** The multilayered ceramic capacitor of claim 13, wherein, in the multilayered ceramic capacitor, a content of Ge based on 100 moles of Ti is about 0.01 moles to about 20 moles.

FIG. 1

FIG. 2

# FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240086808

- KR 1020240019879